# FASCICULE DE BREVET EUROPEEN

(11) **EP 2 751 860 B1**
(45) Date de publication et mention de la délivrance du brevet: **04.03.2015**
(21) Numéro de dépôt: 12750430.6
(22) Date de dépôt: 20.07.2012
(51) Int. Cl.: H01M 4/92, H01M 4/86, H01M 4/88, H01M 8/10

(54) **CATALYSEUR NANOSTRUCTURÉ EN PTXMY POUR PILES À COMBUSTIBLE PEM À HAUTE ACTIVITÉ ET À PRODUCTION MODÉRÉE DE H2O2**
NANOSTRUKTURIERTER PTXMY-KATALYSATOR FÜR PEM-BRENNSTOFFZELLEN MIT HOHER AKTIVITÄT UND GEMÄSSIGTER H2O2-PRODUKTION
NANOSTRUCTURED PTXMY CATALYST FOR PEM FUEL CELLS HAVING A HIGH ACTIVITY AND A MODERATE H2O2 PRODUCTION

(30) Priorité: 01.08.2011 FR 1157015
(43) Date de publication de la demande: 09.07.2014
(73) Titulaire: Commissariat à l'Énergie Atomique et aux Énergies Alternatives, 75015 Paris (FR)
(72) Inventeur: FRANCO, Alejandro, 38410 Vaulnaveys Le Haut (FR); FERREIRA DE MORAIS, Rodrigo, Uberlandia , Minas Gerais (BR); LOFFREDA, David, 69670 Vaugneray (FR); SAUTET, Philippe, F-69360 Saint Symphorien d'Ozon (FR)
(74) Mandataire: Cabinet Laurent & Charras
(86) Numéro de dépôt international: PCT/FR2012/051723
(87) Numéro de publication internationale: WO 2013/017772

(56) Documents cités:
- EP-A2- 1 524 711
- DE-A1-102010 044 288
- US-A1- 2009 114 061
- FRÉDÉRIC HASCHÉ ET AL: "Activity, Structure and Degradation of Dealloyed PtNi3 Nanoparticle Electrocatalyst for the Oxygen Reduction Reaction in PEMFC", JOURNAL OF THE ELECTROCHEMICAL SOCIETY, vol. 159, no. 1, 7 décembre 2011 (2011-12-07), pages B24-B33, XP55039414, ISSN: 0013-4651, DOI: 10.1149/2.030201jes
- VOJISLAV R. STAMENKOVIC ET AL: "Trends in electrocatalysis on extended and nanoscale Pt-bimetallic alloy surfaces", NATURE MATERIALS, vol. 6, no. 3, 1 mars 2007 (2007-03-01), pages 241-247, XP055019963, ISSN: 1476-1122, DOI: 10.1038/nmat1840

## Description

### DOMAINE DE L'INVENTION

La présente invention se situe dans le domaine des piles à combustible à membrane échangeuse de protons (« *Proton Exchange Membrane Fuel Cell »* ou PEMFC).

Elle propose une solution permettant de limiter la production de H₂O₂ lors de l'utilisation des catalyseurs bimétalliques de type PtₓM_{y} dans les cathodes de piles à combustible de type PEM, et ce grâce à l'élaboration d'un catalyseur nanostructuré selon l'invention.

### ETAT ANTERIEUR DE LA TECHNIQUE

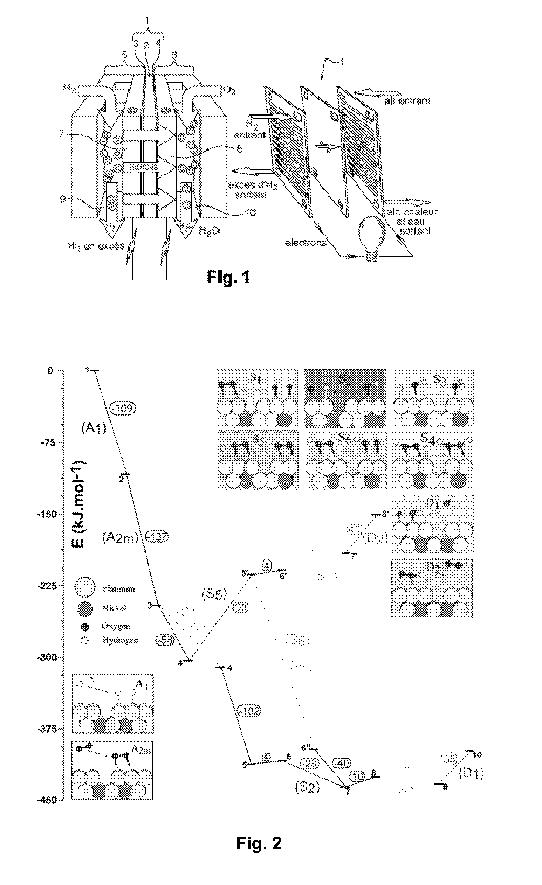

Les PEMFC sont des générateurs de courant dont le principe de fonctionnement, illustré à la figure 1, repose sur la conversion de l'énergie chimique en énergie électrique, par réaction catalytique de l'hydrogène et de l'oxygène.

Les assemblages membrane-électrodes ou AME **1,** appelés communément coeurs de pile, constituent les éléments de base des PEMFC. Ils sont composés de deux électrodes (anode et cathode, respectivement) séparées par une membrane polymère **2,** ladite membrane **2** étant en contact direct avec la couche catalytique **(3, 4,** respectivement) présentes sur chaque électrode. Ainsi, la membrane **2** permet de séparer les compartiments anodique **5** et cathodique **6.**

Les couches catalytiques **3, 4** sont généralement constituées de nano-particules de platine (Pt) supportées par des agrégats de carbone. Des couches de diffusion gazeuse **7, 8** (tissu de carbone, feutre...) sont disposées de part et d'autre de l'AME **1** pour assurer la conduction électrique, la répartition homogène des gaz réactifs et l'évacuation des produits. Un système de canaux **9, 10** placés de chaque côté de l'AME amènent les gaz réactifs et évacuent vers l'extérieur l'eau et les gaz en excès.

A l'anode **3,** l'oxydation de l'hydrogène sur le catalyseur produit des protons H⁺ et des électrons e⁻. Les protons traversent ensuite la membrane polymère **2** avant de réagir avec l'oxygène à la cathode **4.** La réaction des protons avec l'oxygène (ORR pour l'acronyme anglo-saxon « *Oxygen Redatction Reaction* ») à la cathode conduit à la formation d'eau, d'un peu de peroxyde d'hydrogène (H₂O₂) et à la production de chaleur. L'amélioration de la durée de vie et la diminution des coûts des PEMFC constituent un enjeu majeur pour l'utilisation et le développement des piles pour le marché grand public. C'est pourquoi, la mise en évidence et la compréhension des phénomènes de vieillissement des coeurs de pile sont aujourd'hui essentielles.

Les nanoparticules de type PtₓM_{y}, M étant un élément métallique de transition (par exemple Ni, Fe, Co, Cr), sont des catalyseurs alternatifs intéressants en ce qui concerne la réaction ORR se produisant à la cathode des PEMFC (Stamenkovic B. et al., SCIENCE, 315, 2007, 493 ; Stamenkovic B. et al., J. AM. CHEM. SOC., 128, 2006, 8813-8819). Ces catalyseurs bimétalliques, associant un second métal meilleur marché que le platine, permettent ainsi de réduire globalement le coût du catalyseur. En revanche, ils ont la particularité d'augmenter la production de peroxyde d'hydrogène (H₂O₂), co-produit de la réaction avec l'eau, pendant le fonctionnement des PEMFC.

Or, le peroxyde d'hydrogène est l'un des agents chimiques responsables de la dégradation de la membrane 2 par un procédé appelé réaction de Fenton. Celle-ci provient de la dissociation du peroxyde d'hydrogène en un radical et en un ion, catalysée par les ions métalliques Fe²⁺ ou Fe³⁺ générés par la corrosion des plaques bipolaires :

*H*₂*O*₂ + *Fe*²⁺ → *Fe*³⁺ + *HO^{•}* + *OH⁻*

*H*₂*O*₂ + *Fe*³⁺ → *Fe*²⁺ + *HOO^{•}* + *H*⁺

*HOO^{•}* + *Fe*³⁺ → *Fe*²⁺ + *O*₂ + *H*⁺

*H₂O₂* + *HO*^{•} → *H₂O* + *HOO^{•}*

*HO^{•}* + *Fe*²⁺ → *Fe*³⁺ + *OH⁻*

Le radical oxygène formé lors de la décomposition attaque le polymère conducteur protonique dégradant ainsi la membrane **2** via des réactions chimiques complexes (Romain Coulon et al. ECS Trans. 25 (35), 2010, 259-273)

Le document HASCHE et al. (Journal of the Electrochemical Society, vol. 159, no. 1, 2011, pp B24-33) décrit un procédé de fabrication d'une couche catalytique pour PEMFC à base de nanoparticules de PtNi3, recuites puis soumises à lixiviation électrochimique.

### EXPOSE DE L'INVENTION

Le principe de l'invention repose sur une analyse théorique du mécanisme réactionnel de la formation de l'eau et du peroxyde d'hydrogène sur une surface catalytique modèle de Pt₃Ni(111) (dite « Pt-skeleton »), au moyen de calculs utilisant la théorie de la fonctionnelle de la densité. Les résultats scientifiques correspondants montrent (Figure 2), que la formation du peroxyde d'hydrogène (H₂O₂) sur ce catalyseur bimétallique bien structuré présente une barrière thermodynamique globale positive ou endothermique (associée à un coût énergétique important), au contraire de la formation de l'eau qui est exothermique (coût énergétique amoindri). En d'autres termes, la particularité de ce catalyseur bimétallique de type « Pt-skeleton » est de diminuer significativement la sélectivité en peroxyde d'hydrogène et cela via sa morphologie singulière présentant des lacunes en surface en second métal nickel, selon un réseau régulier. Il a également été observé qu'il n'y a pas de sites actifs vis-à-vis de la réaction ORR à l'intérieur de ces lacunes. Dans ces conditions, la formation de H₂O₂ semble donc improbable ou du moins fortement diminuée.

La présente invention a donc trait à une approche tout à fait originale pour protéger la membrane et ainsi augmenter sa durée de vie dans une pile PEMFC. Il s'agit ici de mimer la structure catalytique particulière décrite ci-dessus, afin de réduire la formation de H₂O₂ tout en préservant l'activité envers l'ORR (formation d'eau à partir de l'oxygène et des protons).

Pour fabriquer un catalyseur ainsi nanostructuré, la combinaison de trois techniques différentes est nécessaire: un recuit suivi d'un dépôt MOCVD (« *MetcrlloOrgarnic Chemical Vapor Deposition* »), puis d'une lixiviation chimique (extraction du second métal en surface via l'électrolyte).

En d'autres termes et selon un premier aspect, la présente invention concerne un procédé de fabrication d'un catalyseur pour PEMFC à base de PtₓM_{y}, comprenant les étapes suivantes :
- dépôt sur un support de nanostructures de PtₓM_{y} ;
- recuit des nanostructures ;
- dépôt d'une couche de PtₓM_{y} au-dessus des nanostructures ainsi formées ;
- lixiviation chimique du métal M.

Dans un premier cas de figure, le support correspond à la couche de diffusion des gaz. De manière connue, une telle couche est typiquement en carbone et présente classiquement une épaisseur de l'ordre de 200 micromètres.

Toutefois, il se peut que cette couche soit sensible à la chaleur et donc potentiellement endommagée par les températures imposées lors du recuit. Dans ce cas de figure, le dépôt des nanostructures se fait sur un support qui est un substrat résistant à la chaleur, tel qu'une couche de silice. Après recuit, les nanostructures doivent alors être transférées sur la couche de diffusion des gaz. Ce transfert peut être réalisé en détachant les nanostructures du premier support à l'aide d'un électrolyte, puis par imprégnation de la couche de diffusion des gaz par ces nanostructures.

Ainsi et selon ce mode de réalisation particulier, le procédé selon l'invention comporte une étape supplémentaire consistant à transférer, après recuit, les nanostructures sur la couche de diffusion des gaz.

Dans le cadre de l'invention, M représente un métal de transition, avantageusement choisi parmi le nickel (Ni), le fer (Fe), le cobalt (Co) ou le chrome (Cr). M est de même nature chimique aux deux étapes de dépôt (nanostructures puis couche). Toutefois, un catalyseur contenant plusieurs métaux de transition de nature différente est envisageable (matériau multimétallique).

Dans la formule PtₓM_{y}, x et y représentent les stoechiométries du platine et du métal de transition, respectivement. Dans un mode de réalisation privilégié, PtₓM_{y} représente Pt₃Ni, avec x = 3 et y = 1, respectivement.

La première étape du procédé correspond donc au dépôt sur un support de nanostructures en PtₓM_{y}. Dans le cadre de l'invention, on entend par nanostructures, des structures de taille inférieure à 10 nanomètres. Dans un cas particulier, il s'agit de nanoparticules de forme sphérique, définies par leur diamètre inférieur à 10 nm. Alternativement, il peut s'agir de bâtonnets dont la plus grande dimension est inférieure à 10 nm.

De manière avantageuse, ce dépôt est réalisé par pulvérisation cathodique (ou en anglais *« ion beam sputtering* » ou IBS). Alternativement, ces nanostructures sont formées par synthèse chimique, avantageusement à l'aide de précurseurs en phase liquide et à basse température.

En pratique, les atomes de Pt et M sont déposés sur le substrat en utilisant une source de nano-agrégats pour former des nanostructures de PtₓM_{y}, par exemple avec un temps d'exposition de 30 minutes.

L'étape suivante consiste à réaliser un recuit de ces nanostructures. Le but de cette étape est de générer des nanostructures présentant une morphologie dite « coeur/coquille ». Le fait de concentrer le métal M sur le noyau des nanostructures permet d'augmenter la stabilité du catalyseur.

La température du recuit dépend notamment de la taille des nanostructures mais ne doit pas affecter l'intégrité du support. Celui-ci est généralement réalisé à une température comprise entre 600°C et 1200°C, avantageusement comprise entre 700 °C et 800 °C. La durée du recuit est généralement d'une heure.

L'étape suivante consiste à déposer une couche en PtₓM_{y}, au-dessus ou à la surface des nanostructures obtenues à l'issue de la première étape. Il s'agit d'obtenir une monocouche de stoechiométrie homogène (« *bulk-truncarted layer* »)*.* En d'autres termes, il s'agit de réaliser un enrobage de ces nanostructures à l'aide de cette couche.

Une technique particulièrement adaptée pour ce dépôt est la technique MOCVD (acronyme anglo-saxon pour « *MetalloOrganic Chemical Vapor Deposition* »). Cette technique nécessite la mise en oeuvre de précurseurs organométalliques adaptés. Par exemple, les précurseurs pour un dépôt de platine et cobalt peuvent être du diméthyl(1,5-cyclooctadiène) platinum(II) [Pt^{II}(Me₂,cod), Strem] et de l'acétylacétonate de cobalt(III) [Co^{III}(acac)₃, Strem], solubilisés dans le toluène, avec des concentrations inférieures à 0,03 M.

La température de l'étape de dépôt par MOCVD dépend notamment de la nature des précurseurs organométalliques en présence, mais est généralement comprise entre 200 °C et 400 °C, avantageusement de l'ordre de 300 °C.

Alternativement et comme dans la première étape relative au dépôt des nanostructures, ce dépôt peut être réalisé par pulvérisation cathodique (ou en anglais « *ion beam sputtering »* ou IBS)

L'étape finale consiste à réaliser une lixiviation chimique du métal M, de sorte à former des lacunes ou cavités dans la couche de PtₓM_{y}.

Cette élimination partielle du métal M peut par exemple être réalisée par immersion dans un électrolyte liquide, notamment dans un acide tel que l'acide sulfurique (H₂SO₄), par exemple à une concentration 0.1M pendant 1 heure.

Cette lixiviation chimique du métal M dans la couche est avantageusement contrôlée de manière à produire des lacunes ou cavités structurées, de taille n'excédant pas 6 Angströms. En effet, des cavités plus grosses sont susceptibles de fournir des sites actifs vis-à-vis de la production de peroxyde d'hydrogène.

De manière privilégiée, les lacunes formées à l'issue de l'étape de lixiviation présente une taille comprise entre 2 et 6Å.

Selon un autre aspect de l'invention, celle-ci offre un nouveau catalyseur nanostructuré qui combine les avantages résultant des nanostructures coeur/coquille pures en PtₓM_{y} (offrant une activité ORR supérieure à celle du Pt pur avec une bonne stabilité) et une couche de PtₓM_{y} avec des lacunes (réduisant la production de H₂O₂).

En d'autres termes, la présente invention propose un catalyseur susceptible d'être obtenu à l'aide du procédé décrit ci-dessus, ledit catalyseur comprenant des nanostructures coeur/coquille en PtₓM_{y} recouvertes d'une couche de PtₓM_{y} présentant des lacunes.

Dans le cadre de l'invention, ces lacunes ou cavités ne sont pas traversantes et ne débouchent donc pas sur la couche de diffusion des gaz. En outre et comme déjà dit, leur taille (assimilable ici à leur diamètre) ne dépasse avantageusement pas les 5 à 6 Angströms, avec une taille avantageusement comprise entre 2 et 6Å.

Comme déjà dit, un tel catalyseur présente tout son intérêt dans le cadre de piles à combustible de type PEMFC, en particulier au niveau de la cathode de telles piles. Toutefois, il est envisageable de prévoir une pile dotée d'un catalyseur selon l'invention à la fois à la cathode et à l'anode.

De manière notoire, la lixiviation se déroule directement sur la cathode et/ou l'anode de la pile, avant son montage dans l'AME. Ceci permet d'assurer l'efficacité et le contrôle de la lixiviation.

Ainsi, la présente invention offre un procédé d'amélioration de la durée de vie d'une pile à combustible de type PEMFC consistant à utiliser comme catalyseur, au moins au niveau de sa cathode, un matériau actif tel que décrit précédemment. Comme démontré dans le cadre de la présente demande, il en résulte une réduction de la production de H₂O₂.

### BREVE DESCRIPTION DES FIGURES

La manière dont l'invention peut être réalisée et les avantages qui en découlent ressortiront mieux de l'exemple de réalisation qui suit, donné à titre indicatif et non limitatif, à l'appui des figures annexées parmi lesquelles :
La figure 1 représente le schéma du principe de fonctionnement d'une pile à combustible de type PEMFC.
La figure 2 représente le profil d'énergie thermodynamique pour la formation de H₂O et H₂O₂ sur une surface Pt₃Ni(111) de type « Pt-skeleton » établi à partir de calculs utilisant la théorie de la fonctionnelle de la densité en conditions périodiques. S5 représente l'étape de formation de l'hydroperoxyl (OOH) qui est l'espèce de surface précurseur pour la formation du peroxyde d'hydrogène H₂O₂.
La figure 3 représente les différentes étapes mises en oeuvre pour la fabrication d'un catalyseur nanostructuré selon l'invention : A/ recuit ; B/ dépôt de la couche de Pt₃M grâce à la technique MOCVD ; C/ lixiviation chimique du métal M.
La figure 4 représente l'évolution de la conductivité de la membrane en fonction du temps pour 2 taux différents de production de H₂O₂ (100% et 50%, respectivement).

### MODES DE REALISATION DE L'INVENTION

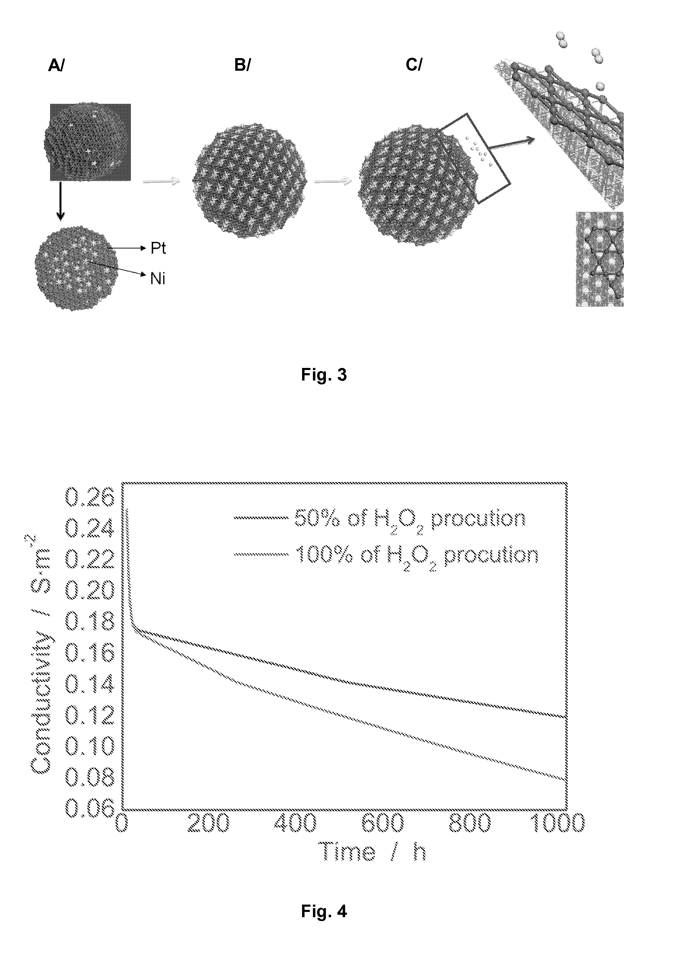

Des expériences comparatives ont été menées dans une pile PEMFC contenant soit :
- une membrane en présence d'une cathode avec une structure coeur/coquille en Pt₃Ni,
- ou, une membrane en présence d'une cathode avec un catalyseur Pt₃Ni nanostructuré selon l'invention, en particulier selon le procédé illustré à la figure 3.

Les résultats sont présentés à la figure 4.

Dans le premier cas, la membrane a une durabilité (perte de conductivité protonique de 80%) d'environ 1000 heures dans des conditions OCV (« *Open Circuit Voltage* »: température = 80°C ; humidité relative de l'anode et de la cathode = 80% ; pression de l'anode et de la cathode : 1.5 bar; chargement de PtNi : 0.3 mg.cm⁻² dans l'anode et 0.6 mg.cm⁻² dans la cathode ; épaisseur de la membrane : 25 µm ; surface active : 25 cm²).

Dans les mêmes conditions, le catalyseur Pt₃Ni nanostructuré selon l'invention permet de diminuer de 50% la production de H₂O₂. Par ailleurs, après 1000 heures de fonctionnement, la conductivité de la membrane est à peu près doublée, ce qui prolonge d'environ 500 heures la durée de vie de la pile (définie ici comme le temps nécessaire pour que le potentiel de la cellule devienne nul).

## Revendications

1. Procédé de fabrication d'un catalyseur (3, 4) pour pile à combustible à membrane échangeuse de protons PEMFC, le dit catalyseur étant à base de PtₓM_{y}, M étant un métal de transition, le dit procédé comprenant les étapes suivantes :
- dépôt sur un support de nanostructures en PtₓM_{y} ;
- recuit des nanostructures ;
- dépôt d'une couche de PtₓM_{y} à la surface des nanostructures ainsi formées ;
- lixiviation chimique du métal M.

2. Procédé de fabrication d'un catalyseur (3, 4) pour PEMFC selon la revendication 1, ***caractérisé* en ce que** le support est la couche de diffusion des gaz, avantageusement d'une épaisseur de 200 micromètres.

3. Procédé de fabrication d'un catalyseur (3, 4) pour PEMFC selon la revendication 1, ***caractérisé* en ce que** le support n'est pas la couche de diffusion des gaz et qu'après recuit, les nanostructures sont transférées sur la couche de diffusion des gaz.

4. Procédé de fabrication d'un catalyseur (3, 4) pour PEMFC selon l'une des revendications précédentes, ***caractérisé* en ce que** le métal M est choisi dans le groupe constitué de Ni, Fe, Co et Cr.

5. Procédé de fabrication d'un catalyseur (3, 4) pour PEMFC selon la revendication 4, ***caractérisé* en ce que** le catalyseur est réalisé avec du Pt₃Ni.

6. Procédé de fabrication d'un catalyseur (3, 4) pour PEMFC selon l'une des revendications précédentes, ***caractérisé* en ce que** le dépôt des nanostructures est réalisé par pulvérisation cathodique.

7. Procédé de fabrication d'un catalyseur (3, 4) pour PEMFC selon l'une des revendications précédentes, ***caractérisé* en ce que** le recuit est réalisé à une température comprise entre 600 °C et 1200 °C, avantageusement pendant une durée de 1 heure.

8. Procédé de fabrication d'un catalyseur (3, 4) pour PEMFC selon l'une des revendications précédentes, ***caractérisé* en ce que** le dépôt de la couche de PtₓM_{y} est réalisé par MOCVD.

9. Procédé de fabrication d'un catalyseur (3, 4) pour PEMFC selon la revendication 8, ***caractérisé* en ce que** le dépôt par MOCVD est réalisé à l'aide de précurseurs organométalliques du platine et du métal, avantageusement à une température comprise entre 200 °C et 400 °C, par exemple à 300 °C.

10. Procédé de fabrication d'un catalyseur (3, 4) pour PEMFC selon l'une des revendications précédentes, ***caractérisé* en ce que** la lixiviation chimique du métal M est réalisée par immersion dans un électrolyte liquide, par exemple dans du H₂SO₄, avantageusement pendant 1 heure.

11. Catalyseur susceptible d'être obtenu à l'aide du procédé selon l'une des revendications 1 à 10, ledit catalyseur comprenant des nanostructures coeur/coquille en PtₓM_{y} recouvertes d'une couche de PtₓM_{y} présentant des lacunes.

12. Catalyseur selon la revendication 11, ***caractérisé* en ce que** les lacunes ont une taille n'excédant pas 6 Angstrôms, avantageusement comprise entre 2 et 6Å.

13. Pile à combustible de type PEMFC comprenant au moins au niveau de l'une de ses électrodes, avantageusement la cathode (4), un catalyseur selon la revendication 11 ou 12.

14. Utilisation d'un catalyseur selon la revendication 11 ou 12 pour réduire la production en H₂O₂ d'une pile à combustible de type PEMFC.

15. Utilisation d'un catalyseur selon la revendication 11 ou 12 pour améliorer la durée de vie d'une pile à combustible de type PEMFC.

## Patentansprüche

1. Herstellungsverfahren für einen Katalysator (3, 4) für eine Protonenaustauschmembran-Brennstoffzelle PEMFC, wobei der Katalysator auf Basis von PtₓM_{y} ist, wobei M ein Übergangsmetall ist, wobei das Verfahren die folgenden Schritte umfasst:
- Abscheiden von Nanostrukturen aus PtₓM_{y} auf einem Träger;
- Tempern der Nanostrukturen;
- Abscheiden einer PtₓM_{y}-Schicht auf der Oberfläche der so ausgebildeten Nanostrukturen;
- chemisches Auslaugen des Metalls M.

2. Herstellungsverfahren für einen Katalysator (3, 4) für eine PEMFC nach Anspruch 1, **dadurch gekennzeichnet, dass** der Träger die Gasdiffusionsschicht, vorteilhafter Weise mit einer Dicke von 200 Mikrometer ist.

3. Herstellungsverfahren für einen Katalysator (3, 4) für eine PEMFC nach Anspruch 1, **dadurch gekennzeichnet, dass** der Träger nicht die Gasdiffusionsschicht ist, und dass nach dem Tempern die Nanostrukturen auf die Gasdiffusionsschicht übertragen sind.

4. Herstellungsverfahren für einen Katalysator (3, 4) für eine PEMFC nach einem der vorhergehenden Ansprüche, **dadurch gekennzeichnet, dass** das Metall M aus der Gruppe ausgewählt ist, die aus Ni, Fe, Co und Cr besteht.

5. Herstellungsverfahren für einen Katalysator (3, 4) für eine PEMFC nach Anspruch 4, **dadurch gekennzeichnet, dass** der Katalysator mit Pt₃Ni gefertigt ist.

6. Herstellungsverfahren für einen Katalysator (3, 4) für eine PEMFC nach einem der vorhergehenden Ansprüche, **dadurch gekennzeichnet, dass** die Abscheidung der Nanostrukturen durch Kathodenzerstäubung erfolgt.

7. Herstellungsverfahren für einen Katalysator (3, 4) für eine PEMFC nach einem der vorhergehenden Ansprüche, **dadurch gekennzeichnet, dass** das Tempern bei einer Temperatur zwischen 600°C und 1200°C, vorzugsweise während einer Dauer von 1 Stunde erfolgt.

8. Herstellungsverfahren für einen Katalysator (3, 4) für eine PEMFC nach einem der vorhergehenden Ansprüche, **dadurch gekennzeichnet, dass** die Abscheidung der PtₓM_{y}-Schicht durch MOCVD erfolgt.

9. Herstellungsverfahren für einen Katalysator (3, 4) für eine PEMFC nach Anspruch 8, **dadurch gekennzeichnet, dass** die Abscheidung durch MOCVD mittels organometallischen Vorläuferstoffen von Platin und Metall, vorzugsweise bei einer Temperatur zwischen 200°C und 400°C, beispielsweise bei 300°C erfolgt.

10. Herstellungsverfahren für einen Katalysator (3, 4) für eine PEMFC nach einem der vorhergehenden Ansprüche, **dadurch gekennzeichnet, dass** das chemische Auslaugen des Metalls M durch Eintauchen in einen Flüssigelektrolyten, beispielsweise in H₂SO₄, vorteilhafter Weise während 1 Stunde erfolgt.

11. Katalysator, der mittels des Verfahrens nach einem der Ansprüche 1 bis 10 erhalten werden kann, wobei der Katalysator Kern/Hüllen-Nanostrukturen aus PtₓM_{y} umfasst, die mit einer Hohlräume aufweisenden PtₓM_{y}-Schicht bedeckt sind.

12. Katalysator nach Anspruch 11, **dadurch gekennzeichnet, dass** die Hohlräume eine Größe, die 6 Angstrom nicht überschreitet, vorteilhafter Weise zwischen 2 und 6 Ä haben.

13. Brennstoffzelle des Typs PEMFC, die zumindest im Bereich einer ihrer Elektroden, vorteilhafter Weise der Kathode (4), einen Katalysator nach Anspruch 11 oder 12 umfasst.

14. Verwendung eines Katalysators nach Anspruch 11 oder 12, um die H₂O₂-Erzeugung einer Brennstoffzelle des Typs PEMFC zu reduzieren.

15. Verwendung eines Katalysators nach Anspruch 11 oder 12, um die Lebensdauer einer Brennstoffzelle des Typs PEMFC zu steigern.

## Claims

1. A method of manufacturing a catalyst (3, 4) for a proton-exchange membrane fuel cell PEMFC, said catalyst being PtₓM_{y}-based, M being a transition metal, said method comprising the steps of:
- depositing PtₓM_{y} nanostructures on a support;
- annealing the nanostructures;
- depositing a PtₓM_{y} layer at the surface of the nanostructures thus formed;
- chemically leaching metal M.

2. The method of manufacturing a catalyst (3, 4) for a PEMFC of claim 1, wherein the support is the gas diffusion layer, advantageously with a 200-micrometer thickness.

3. The method of manufacturing a catalyst (3, 4) for a PEMFC of claim 1, wherein the support is not the gas diffusion layer and wherein after annealing, the nanostructures are transferred onto the gas diffusion layer.

4. The method of manufacturing a catalyst (3, 4) for a PEMFC of any of the foregoing claims, wherein metal M is selected from the group formed of Ni, Fe, Co, and Cr.

5. The method of manufacturing a catalyst (3, 4) for a PEMFC of claim 4, wherein the catalyst is formed with Pt₃Ni.

6. The method of manufacturing a catalyst (3, 4) for a PEMFC of any of the foregoing claims, wherein the deposition of nanostructures is performed by cathode sputtering.

7. The method of manufacturing a catalyst (3, 4) for a PEMFC of any of the foregoing claims, wherein the anneal is performed at a temperature in the range from 600 °C to 1,200 °C, advantageously for a 1-hour duration.

8. The method of manufacturing a catalyst (3, 4) for a PEMFC of any of the foregoing claims, wherein the deposition of the PtₓM_{y} layer is performed by MOCVD.

9. The method of manufacturing a catalyst (3, 4) for a PEMFC of claim 8, wherein the MOCVD is performed by means of organometallic precursors of platinum and of the metal, advantageously at a temperature in the range from 200 °C to 400 °C, for example, at 300 °C.

10. The method of manufacturing a catalyst (3, 4) for a PEMFC of any of the foregoing claims, wherein the chemical leaching of metal M is performed by immersion in a liquid electrolyte, for example, in H₂SO₄, advantageously for 1 hour.

11. A catalyst capable of being obtained by means of the method of any of claims 1 to 10, said catalyst comprising core/shell nanostructures made of PtₓM_{y} covered with a PtₓM_{y} layer comprising vacancies.

12. The catalyst of claim 11, wherein the vacancies have a size which does not exceed 6 Angstroms, advantageously in the range from 2 to 6 Angstroms.

13. A PEMFC-type fuel cell comprising at least at one of its electrodes, advantageously the cathode (4), the catalyst of claim 11 or 12.

14. A use of the catalyst of claim 11 or 12 to decrease the H₂O₂ production of a PEMFC-type fuel cell.

15. A use of the catalyst of claim 11 or 12 to improve the lifetime of a PEMFC-type fuel cell.
